# EUROPÄISCHE PATENTSCHRIFT

(11) **EP 2 156 927 B1**
(45) Veröffentlichungstag und Bekanntmachung des Hinweises auf die Patenterteilung: **13.04.2011**
(21) Anmeldenummer: 09177234.3
(22) Anmeldetag: 30.06.2006
(51) Int. Cl.: B25J 17/02

(54) **Vorrichtung zum Be- und/oder Entladen von Stückgütern**
Device for charging or discharging goods
Dispositif pour charger et décharger des marchandises

(30) Priorität: 23.09.2005 DE 102005047644
(43) Veröffentlichungstag der Anmeldung: 24.02.2010
(62) Teilanmeldung aus: 06761739.9
(73) Patentinhaber: Deutsche Post AG, 53113 Bonn (DE)
(72) Erfinder: Echelmeyer, Wolfgang, 27711 Osterholz-Scharmbeck (DE); Franck, Hermann, 27721 Ritterhude (DE); Wellbrock, Eckhard, 28757 Bremen (DE); Rosenhäger, Jörg, 33739 Bielefeld (DE)
(74) Vertreter: Jostarndt, Hans-Dieter

(56) Entgegenhaltungen:
- WO-A1-86/00039
- DE-A1-102004 010 826
- DE-U1- 20 202 926
- FR-A1- 2 647 763
- NL-C1- 1 021 658
- NL-C2- 1 017 970
- US-A- 5 015 145

## Beschreibung

Die Erfindung betrifft eine Vorrichtung zum Be- und/oder Entladen von Stückgütern für von wenigstens einer Seite horizontal zugängliche Transportfahrzeuge oder Transportbehälter, mit einem in das Transportfahrzeug bzw. den Transportbehälter hinein verfahre- oder teleskopierbaren Förderer und mit einem in das Transportfahrzeug oder den Transportbehälter hinein bewegbaren Roboter, wobei der Roboter in einer erhöhten Position über dem Förderer angeordnet ist und an einer Brücke montiert ist, wobei die Brücke zwei senkrechte Schenkel umfasst, deren obere Enden durch einen Querträger verbunden sind, wobei der Förderer ein Förderband umfasst.

Aus der US-Patentschrift US 5,015,145 ist beispielsweise eine Vorrichtung zum Beladen von Stückgütern für von wenigstens einer Seite horizontal zugängliche Transportfahrzeuge oder Transportbehälter bekannt. Die Vorrichtung ist in den Laderaum des Transportfahrzeugs bzw. in den Transportbehälter verfahrbar und führt die Beladung anhand einer zuvor bestimmten optimierten Beladungskonfiguration durch. Die Vorrichtung umfasst dazu ein Förderband zum Anfördern von Stückgütern aus einem Lager und einen Roboter, der einen Teleskoparm aufweist. Der Teleskoparm ist aus einer horizontal verfahrbaren Schiene montiert, welche wiederum vertikal verfahrbar ist. Weitere Fördereinrichtungen sind aus der FR 2 647 763 A1 und der DE 202 02 926 U1 bekannt. Aus der WO 86/00039 A1 ist ein Manipulator mit einem Roboter bekannt, welcher drei in der Länge veränderliche Arme aufweist. Aus der DE 10 2004 010 826 A1 ist eine Vorrichtung zur dreidimensionalen Bewegung eines Gegenstands bekannt, welche einen Gegenstandshalter, ein Baisteil und drei Trägerarme aufweist.

Mit Stückgütern ist alles gemeint, was sich in Form von Kolli transportieren lässt, also weder flüssig- noch gasförmig ist. Flüssigkeiten und Gase in Behältern (z.B. Fässern oder Gasflaschen) zählen jedoch zum Stückgut. Stückgüter können quaderähnliche, rotationskörperähnliche und kompliziertere Formen aufweisen und auch Container, zum Beispiel auf einem Containerschiff umfassen.

Transportfahrzeuge können zum Beispiel Lastkraftwagen, Güterwagen, Schiffe, Flugzeuge, etc. sein. Zu den Transportbehältern gehören zum Beispiel Container. Letztere sind häufig langgestreckte, kastenförmige Transport- und Lagerräume für Stückgut.

In den Distributionszentren von Logistikdienstleistern wird das eintreffende Stückgut mit Hilfe von Vorrichtungen zum Entladen von Stückgütern der eingangs genannten Art entladen und darüber hinaus weitgehend automatisch verteilt. Zu diesem Zweck werden häufig Förderer mit Förderbändern eingesetzt, die nach und nach in das Innere eines Containers hinein verfahren werden, und das im Container gelagerte Stückgut wird mittels eines Roboters auf das Förderband gelegt, woraufhin das Stückgut vom Förderband abtransportiert wird. Der Roboter wird zusammen mit dem Förderer oder zugleich mit diesem in den Container hineinbewegt. Derartige Roboter besitzen ein optisches Erkennungssystem zur Identifizierung von einzelnen Stückgütern und einen Effektor zum Beispiel in Form einer Greifvorrichtung, die das Stückgut nacheinander erfasst und auf das Förderband legt. Diese Art des Entladens ist verhältnismäßig umständlich und damit zeitaufwendig, da die dafür verwendeten Roboter üblicherweise seitlich von oder vor dem Förderband am Ende desselben im Container positioniert sind und sich somit nach dem Erfassen des Stückguts in Richtung der stromabwärtigen Seite des Förderbandes drehen müssen und erst danach das Stückgut auf dem Förderband ablegen können.

Das vorgenannte Problem besteht auch bei Vorrichtungen zum Ein- und Auslagern von Stückgütern für ein Hochregal und ganz allgemein bei Vorrichtungen zum Überführen bzw. Umschlagen von Stückgütern.

Der Erfindung liegt somit die Aufgabe zugrunde, ein schnelles Überführen bzw. Umschlagen, insbesondere Be- und/oder Entladen und Ein- und/oder Auslagern von Stückgütern, als dies bisher möglich ist, zu ermöglichen.

Erfindungsgemäß wird diese Aufgabe durch eine Vorrichtung mit den Merkmalen des unabhängigen Anspruchs 1 gelöst. Vorteilhafte Weiterbildungen der Vorrichtung ergeben sich aus den Unteransprüchen.

Die erfindungsgemäße Vorrichtung zum Be- und/oder Entladen von Stückgütern für von wenigstens einer Seite horizontal zugängliche Transportfahrzeuge oder Transportbehälter umfasst einen in das Transportfahrzeug bzw. den Transportbehälter hinein verfahr- oder teleskopierbaren Förderer und einen in das Transportfahrzeug oder den Transportbehälter hinein bewegbaren Roboter, wobei der Roboter in einer erhöhten Position über dem Förderer angeordnet ist. Der Förderer weist ein Förderband auf, wobei eine das Förderband überspannende Brücke vorgesehen ist, und der Roboter an der Brücke montiert ist. Die Brücke umfasst zwei senkrechte Schenkel, deren obere Enden durch einen Querträger verbunden sind. Der Roboter umfasst drei teleskopierbare Arme, deren eine Enden miteinander verbunden und mit einem gemeinsamen Effektor bestückt sind, und deren andere Enden im Wesentlichen im Dreieck an der Brücke angebracht sind.

Ein erster teleskopierbarer Arm ist mit seinem anderen Ende an einem Schenkel, ein anderes Ende eines zweiten teleskopierbaren Arms ist in der Mitte des Querträgers und ein anderes Ende eines dritten teleskopierbaren Arms ist an dem anderen Schenkel gelenkig befestigt.

Erfindungsgemäß ist die Brücke in der Höhe verfahrbar. Die Brücke kann auch unabhängig vom Förderband oder vom vorderen Ende des Förderbandes in das Transportfahrzeug bzw. in den Transportbehälter hinein verfahrbar sein.

In einem Ausführungsbeispiel der Erfindung ist die Brücke auf einem Wagen montiert, der zusammen mit dem Förderband oder dem vorderen Ende des Förderbandes in das Transportfahrzeug oder den Transportbehälter hinein verfahrbar ist.

Der Erfindung liegt die überraschende Erkenntnis zugrunde, dass durch die Anordnung des Roboters in einer erhöhten Position über dem Förderband selbiger das Stückgut zum Beispiel mit einem Greifer erfassen und unmittelbar auf ein Förderband legen kann, durch das es abtransportiert werden kann. Zusätzliche Schwenk- und Drehbewegungen des Roboters sind nicht erforderlich. Dadurch lässt sich zum Beispiel das Be- und/oder Entladen und Ein- und/oder Auslagern von Stückgütern schneller durchführen.

Zudem wird durch den Roboter auf besonders einfache Weise ein schnelles Be- und/oder Entladen bzw. Ein- und/oder Auslagern von Stückgütern erleichtert, da damit zum Beispiel bei Containern der gesamte rechteckige Querschnitt abgedeckt werden kann.

Der Roboter verfügt über mehrere verfahrbare Achsen, damit Stückgut in einem Container in jeder möglichen Lage ergriffen werden kann. Insbesondere durch unterschiedliches Ausfahren der teleskopierbaren Arme des Roboters kann dabei nicht nur eine bestimmte Ebene, sondern sogar ein Volumen in einem Container abgedeckt werden, so dass damit auch der gesamte Container entladen werden kann.

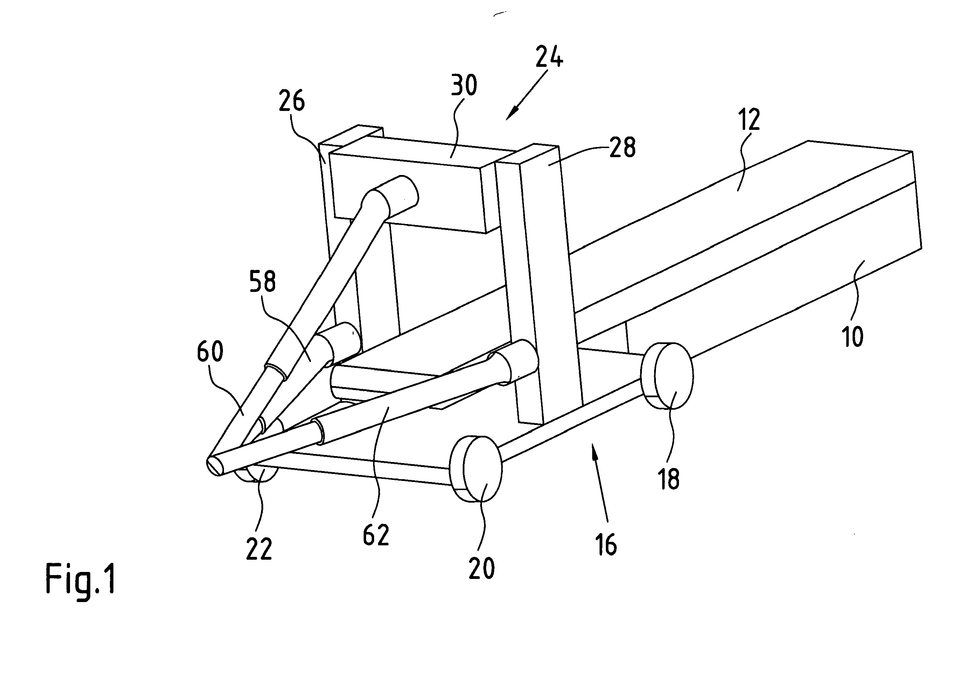

Weitere Merkmale und Vorteile der Erfindung ergeben sich aus den Ansprüchen und der nachstehenden Beschreibung, in der die Erfindung anhand der schematischen Zeichnung in der einzigen Fig. 1 in Einzelnen erläutert ist.

Fig. 1 zeigt eine Vorrichtung zum Entladen gemäß einer Ausführungsform der Erfindung in einer Anordnung, wie sie in einen nicht dargestellten, hierin links unten zu denkenden, Container eingeführt wird. Die Vorrichtung zum Entladen umfasst einen Förderer 10 mit einem Förderband 12, das mit Hilfe einer nicht dargestellten Teleskopiervorrichtung in Längsrichtung in einen kastenförmigen, lang gestreckten Container von dessen Stirnseite her einfahrbar ist. Der Förderer 10 kann somit entsprechend dem fortschreitenden Entladevorgang seine Länge stufenlos verändern. In Zuordnung zu dem vorderen Ende des Förderers 10 ist ein Wagen 16 vorgesehen, der mit Hilfe von Rollen 18, 20 und 22 in Längsrichtung des Containerinnenraums verfahrbar ist. Der Wagen 16 kann mit dem vorderen Ende des Förderers 10 verbunden sein oder kann in seiner Bewegung in anderer Weise mit dem vorrückenden Förderer 10 synchronisiert sein.

Auf dem Wagen 16 befindet sich eine Brücke, die den Förderer 10 in der Form eines umgekehrten U überbrückt. Die Brücke ist mit 24 bezeichnet worden und umfasst senkrechte Schenkel 26, 28, deren obere Enden durch einen Querträger 30 verbunden sind. Der Querträger 30 ist in der Höhe verfahrbar gestaltet. Die Brücke 24 kann mit einer senkrechten Verfahrvorrichtung die Höhe verändern.

An der Brücke 24 sind teleskopierbare Arme 58, 60 und 62 im Wesentlichen im Dreieck angebracht, das heißt ein teleskopierbarer Arm 58 ist mit seinem einen Ende an dem Schenkel 26, ein Ende des teleskopierbaren Arms 60 ist in der Mitte des Querträgers 30 und ein Ende des teleskopierbaren Arms 62 ist an dem Schenkel 28 gelenkig befestigt, und die anderen Enden der teleskopierbaren Arme 58, 60 und 62 sind miteinander verbunden und mit einem gemeinsamen Effektor (nicht gezeigt) bestückt. Als Effektor kann ein Greifer eingesetzt werden. Die teleskopierbaren Arme 58, 60, 62 sind auf derjenigen Seite der Brücke 24 angeordnet, die in das Innere des nicht dargestellten Containers zeigt. Die Komponenten 58, 60 und 62, sowie der Greifer bilden somit einen Roboter.

Selbstverständlich weist der Roboter auch geeignete Antriebe und Steuerungen auf, wobei letztere auch fern davon vorgesehen sein können.

### Bezugszeichenliste:

- 10: Förderer
- 12: Förderband
- 16: Wagen
- 18,20,22: Rolle
- 24: Brücke
- 26,28: Schenkel
- 30: Querträger
- 58,60,62: teleskopierbarer Arm

## Patentansprüche

1. Vorrichtung zum Be- und/oder Entladen von Stückgütern für von wenigstens einer Seite horizontal zugängliche Transportfahrzeuge oder-behälter, mit einem in das Transportfahrzeug bzw. den Transportbehälter hinein verfahr- oder teleskopierbaren Förderer (10) und mit einem in das Transportfahrzeug oder den Transportbehälter hinein bewegbaren Roboter, wobei der Roboter in einer erhöhten Position über dem Förderer (10) angeordnet ist, und an einer Brücke (24) montiert ist, wobei die Brücke (24) zwei senkrechte Schenkel (26,28) umfasst, deren obere Enden durch einen Querträger (30) verbunden sind wobei der Förderer (10) ein Förderband (12) umfasst
**dadurch gekennzeichnet,**
**dass** der Roboter drei teleskopierbare Arme (58,60,62) umfasst, deren eine Enden miteinander verbunden und mit einem gemeinsamen Effektor bestückt sind, und deren andere Enden im Wesentlichen im Dreieck an der Brücke (24) angebracht sind, wobei ein erster teleskopierbarer Arm (58) mit seinem anderen Ende an einem Schenkel (26), ein anderes Ende eines zweiten teleskopierbaren Arms (60) in der Mitte des Querträgers (30) und ein anderes Ende eines dritten teleskopierbaren Arms (62) an dem anderen Schenkel (28) gelenkig befestigt ist, wobei die Brücke als eine das Förderband (12) überspannende Brücke (24) ausgebildet ist wobei der Querträger (30) in der Höhe verfahrbar gestaltet ist.

2. Vorrichtung nach Anspruch 1,
**dadurch gekennzeichnet,**
**dass** die Brücke (24) in der Höhe verfahrbar ist.

3. Vorrichtung nach Anspruch 1 oder 2,
**dadurch gekennzeichnet,**
**dass** die Brücke (24) unabhängig vom Förderband (12) oder vom vorderen Ende des Förderbandes (12) in das Transportfahrzeug bzw. in den Transportbehälter hinein verfahrbar ist.

4. Vorrichtung nach einem der vorangehenden Ansprüche,
**dadurch gekennzeichnet,**
**dass** die Brücke (24) auf einem Wagen (16) montiert ist, der zusammen mit dem Förderband (12) oder dem vorderen Ende des Förderbandes (12) in das Transportfahrzeug oder den Transportbehälter hinein verfahrbar ist.

## Claims

1. A device for loading and/or unloading packaged goods for transport vehicles or transport containers that are horizontally accessible from at least one side, comprising a conveyor (10) that can be moved or telescoped into the transport vehicle or transport container, and comprising a robot that can be moved into the transport vehicle or transport container, whereby the robot is arranged in an elevated position above the conveyor (10) and is mounted on a bridge (24), whereby the bridge (24) has two vertical legs (26, 28), whose upper ends are connected by a cross beam (30), whereby the conveyor (10) comprises a conveyor belt (12),
**characterized in that**
the robot has three telescopic arms (58, 60, 62), whose one ends are connected to each other and which are equipped with a shared effector and whose other ends are arranged essentially in a triangle on the bridge (24), whereby a first telescopic arm is articulatedly attached with its other end to a leg (26), another end of a second telescopic arm (60) is attached in the middle of the cross member (30), and another end of a third telescopic arm (62) is attached to the other leg (28), whereby the bridge is configured as a bridge (24) that spans the conveyor belt (12), whereby the height of the cross beam (30) is adjustable.

2. The device according to Claim 1,
**characterized in that**
the height of the bridge (24) is adjustable.

3. The device according to Claim 1 or 2,
**characterized in that**,
independently of the conveyor belt (12) or of the front end of the conveyor belt (12), the bridge (24) can be moved into the transport vehicle or transport container.

4. The device according to one of the preceding claims,
**characterized in that**
the bridge (24) is mounted on a cart (16) that, together with the conveyor belt (12) or with the front end of the conveyor belt (12), can be moved into the transport vehicle or into the transport container.

## Revendications

1. Dispositif pour charger et/ou décharger des envois de détail pour des véhicules ou conteneurs de transport accessibles horizontalement par au moins un côté, avec un convoyeur (10) pouvant être déplacé ou pouvant se mouvoir télescopiquement pour entrer dans le véhicule de transport ou le conteneur de transport et avec un robot mobile pouvant entrer dans le véhicule de transport ou le conteneur de transport, le robot étant situé dans une position surélevée au-dessus du convoyeur (10) et étant monté sur un pont (24), le pont comprenant deux montants verticaux (26, 28) dont les extrémités supérieures sont reliées par une traverse (30), le convoyeur (10) comprenant une bande convoyeuse (12),
**caractérisé en ce que**
le robot comprend trois bras télescopiques (58, 60, 62) dont les premières extrémités sont reliées entre elles et sont dotées d'un actionneur commun et dont les autres extrémités sont disposées sensiblement en triangle sur le pont (24), un premier bras télescopique (58) étant, en son autre extrémité, fixé de manière articulée sur un montant (26), une autre extrémité d'un deuxième bras télescopique (60) étant fixée de manière articulée au milieu de la traverse (30) et une autre extrémité d'un troisième bras télescopique (62) étant fixée de manière articulée sur l'autre montant (28), le pont se présentant sous la forme d'un pont (24) enjambant la bande convoyeuse (12), la traverse (30) étant réalisée de manière à pouvoir être déplacée en hauteur.

2. Dispositif selon la revendication 1, **caractérisé en ce que** le pont (24) est déplaçable en hauteur.

3. Dispositif selon la revendication 1 ou 2, **caractérisé en ce que** le pont (24) peut être déplacé pour entrer dans le véhicule de transport ou le conteneur de transport indépendamment de la bande convoyeuse (12) ou de l'extrémité avant de la bande convoyeuse (12).

4. Dispositif selon l'une des revendications précédentes, **caractérisé en ce que** le pont (24) est monté sur un chariot (16) qui peut être déplacé pour entrer dans le véhicule de transport ou le conteneur de transport conjointement avec la bande convoyeuse (12) ou l'extrémité avant de la bande convoyeuse (12).
